## Europäisches Patentamt

## European Patent Office

## Office européen des brevets

(19)

(11) **EP 1 118 634 B1**

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(51) Int Cl.⁷: **C08J 5/18**, C08J 3/22, C08L 67/02, C09K 21/00, C08K 5/134, C08K 5/5333, C09K 21/12

(21) Anmeldenummer: **01100062.7**

(22) Anmeldetag: **10.01.2001**

(54) **Transparente, flammhemmend ausgerüstete, orientierte Folie aus einem kristallisierbaren Thermoplasten**

Transparent, flame retardant oriented film of a crystallisable thermoplastic material

Film transparent, ignifuge, orienté d'une matière thermoplastique crystallisable

(84) Benannte Vertragsstaaten:
**DE FR GB IT LU NL**

(30) Priorität: **20.01.2000 DE 10002174**

(43) Veröffentlichungstag der Anmeldung:
**25.07.2001 Patentblatt 2001/30**

(73) Patentinhaber: **Mitsubishi Polyester Film GmbH**
**65203 Wiesbaden (DE)**

(72) Erfinder:
• **Murschall, Ursula, Dr.**
**55283 Nierstein (DE)**
• **Crass, Günther**
**65232 Taunusstein (DE)**

• **Kern, Ulrich, Dr.**
**55218 Ingelheim (DE)**
• **Stopp, Andreas**
**55218 Ingelheim (DE)**

(74) Vertreter: **Schweitzer, Klaus, Dr. et al**
**Patentanwaltskanzlei Zounek,**
**Industriepark Kalle-Albert,**
**Gebäude H391**
**Rheingaustrasse 190-196**
**65174 Wiesbaden (DE)**

(56) Entgegenhaltungen:
DE-A- 4 129 980        DE-A- 19 630 599
US-A- 5 660 931        US-A- 5 804 626

**Beschreibung**

Die Erfindung betrifft eine transparente, flammhemmend ausgerüstete, orientierte Folie aus einem Thermoplasten, deren Dicke im Bereich von 5 µm bis 300 µm liegt. Die Folie enthält mindestens ein Flammschutzmittel und zeichnet sich durch sehr gute optische und mechanische Eigenschaften sowie durch eine gute Verstreckbarkeit und eine wirtschaftliche Herstellung aus. Die Erfindung betrifft ferner ein Verfahren zur Herstellung dieser Folie und ihre Verwendung.

Transparente Folie aus kristallisierbaren Thermoplasten mit einer Dicke zwischen 5 µm und 300 µm sind hinreichend bekannt.

Diese Folien sind nicht flammhemmend ausgerüstet, so dass sich weder die Folien noch die daraus hergestellten Artikel für Anwendungen eignen, wo ein Brandschutz bzw. eine Schwerentflammbarkeit gefordert sind.

In der DE-A 2346 787 ist ein schwerentflammbarer Rohstoff beschrieben. Neben dem Rohstoff ist auch die Verwendung des Rohstoffs zur Herstellung von Folien und Fasern beschrieben. Bei der Herstellung von Folien mit dem dort beschriebenen phospholanmodifizierten Rohstoff zeigten sich folgende Defizite:

Der Rohstoff ist sehr hydrolyseempfindlich und muß sehr gut vorgetrocknet werden. Beim Trocknen des Rohstoffes mit Trocknern, die dem Stand der Technik entsprechen, verklebt der Rohstoff, so dass nur unter schwierigsten Bedingungen eine Folie herstellbar ist.

Die unter extremen, unwirtschaftlichen Bedingungen hergestellten Folien verspröden bei Temperaturbelastungen, d. h. die mechanischen Eigenschaften gehen aufgrund der Versprödung stark zurück, so dass die Folie unbrauchbar ist. Bereits nach 48 Stunden Temperaturbelastung tritt diese Versprödung auf.

Aufgabe der vorliegenden Erfindung war es, eine transparente, flammhemmend ausgerüstete, orientierte Folie mit einer Dicke von 5 - 300 µm bereitzustellen, die neben einer wirtschaftlichen Herstellung, einer guten Verstreckbarkeit, guten mechanischen sowie optischen Eigenschaften, vor allem eine flammhemmende Wirkung und keine Versprödung nach Temperaturbelastung aufweist.

Eine flammhemmende Wirkung bedeutet, dass die transparente Folie in einer sogenannten Brandschutzprüfung die Bedingungen nach DIN 4102 Teil 2 und insbesondere die Bedingungen nach DIN 4102 Teil 1 erfüllt und in die Baustoffklasse B 2 und insbesondere B 1 der schwer entflammbaren Stoffe eingeordnet werden kann. Des Weiteren soll die Folie den UL-Test 94 "Vertical Burning Test for Flammability of Plastic Material" bestehen, so dass sie in die Klasse 94 VTM-0 eingestuft werden kann. Das bedeutet, dass die Folie 10 Sekunden nach Wegnahme des Bunsenbrenners nicht mehr brennt, nach 30 Sekunden kein Glühen beobachtet wird und auch kein Abtropfen festgestellt wird.

Zu den guten optischen Eigenschaften zählt beispielsweise eine hohe Lichttransmission (> 80%), ein hoher Oberflächenglanz (> 100), eine niedrige Trübung (< 20%) sowie eine niedrige Gelbzahl (YID < 10).

Zu den guten mechanischen Eigenschaften zählt unter anderem eine hoher E-Modul ($E_{MD}$ > 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch in Querrichtung hervorragend und ohne Abrisse orientieren läßt.

Zu der wirtschaftlichen Herstellung zählt, dass die Rohstoffe bzw. die Rohstoffkomponenten, die zur Herstellung der schwer entflammbaren Folie benötigt werden, mit handelsüblichen Industrietrocknern, wie Vakuumtrockner, Wirbelschichttrockner, Fließbetttrockner oder Festbetttrockner (Schachttrockner), getrocknet werden können. Wesentlich ist, dass die Rohstoffe nicht verkleben und nicht thermisch abgebaut werden. Die genannten Trockner arbeiten bei Temperaturen zwischen 100 und 170 °C, wo nach der Erwartung des Fachmanns flammhemmend ausgerüsteten Rohstoffe verkleben und die Trockner und/oder Extruder so zusetzen, dass die verkohlte Masse herausgebrochen werden muß, so dass keine Folienherstellung möglich ist. Bei dem am schonendsten trocknenden Vakuumtrockner durchläuft der Rohstoff einen Temperaturbereich von ca. 30 °C bis 130 °C bei einem Vakuum von 50 mbar. Danach ist ein sog. Nachtrocknen in einem Hopper bei Temperaturen von 100 - 130 °C und einer Verweilzeit von 3 bis 6 Stunden erforderlich. Selbst hier verkleben die nach dem Stand der Technik hergestellten flammhemmend ausgerüsteten Rohstoffe extrem.

Keine Versprödungen bei kurzer Temperaturbelastung bedeutet, dass die Folie nach 100 Stunden Tempervorgang bei 100 °C in einem Umluftofen keine Versprödung und keine schlechten mechanischen Eigenschaften aufweist.

Die erfindungsgemäße transparente Folie enthält als Hauptbestandteil einen kristallisierbaren Thermoplasten. Geeignete kristallisierbare bzw. teilkristalline Thermoplasten sind beispielsweise Polyethylenterephthalat, Polybutylenterephthalat, Polyethylennaphthalat, wobei Polyethylenterephthalat bevorzugt ist.

Erfindungsgemäß versteht man unter kristallisierbaren Thermoplasten kristallisierbare Homopolymere, kristallisierbare Copolymere, kristallisierbare Compounds (Mischungen), kristallisierbares Rezyklat und andere Variationen von kristallisierbaren Thermoplasten.

Die transparente Folie kann sowohl einschichtig als auch mehrschichtig sein. Die transparente Folie kann ebenfalls mit diversen Beschichtungsmitteln wie Copolyestern oder Haftvermittlern beschichtet sein.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate, wobei die Halogenverbindungen aufgrund der entstehenden halogenhaltigen Nebenprodukte nachteilig sind. Des Weiteren ist die geringe Lichtbeständigkeit einer damit ausgerüsteten Folie neben der Entwicklung von Halogenwasserstoffen im Brandfall extrem nachteilig.

Geeignete Flammschutzmitteln, die gemäß der Erfindung eingesetzt werden, sind beispielsweise organische Phosphorverbindungen wie Carboxyphosphinsäuren, deren Anhydride und Dimethyl-methylphosphonat. Erfindungswesentlich ist, dass die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali/Erdalkalistearate und/oderAlkali-/Erdalkalicarbonate in Mengen von 0,01 bis 1,0 Gew.-% eingesetzt. Phenolische Stabilisatoren werden in einer Menge von 0,05 bis 0,6 Gew.-%, insbesondere 0,15 bis 0,3 Gew.-% und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertärbutyl-4-Hydroxybenzyl)benzol sind besonders vorteilhaft.

Die Standardviskosität SV (DCE) des Polyethylenterephthalates, gemessen in Dichloressigsäure nach DIN 53728, liegt zwischen 600 und 1000, vorzugsweise zwischen 700 und 900.

Die transparente Polyethylenterephthalat-Folie, die mindestens ein Flammschutzmittel enthält, kann sowohl einschichtig als auch mehrschichtig sein. In der mehrschichtigen Ausführungsform ist die Folie aus mindestes einer Kernschicht und mindestens einer Deckschicht aufgebaut, wobei insbesondere ein dreischichtiger A-B-A oder A-B-C Aufbau bevorzugt ist. Für diese Ausführungsform ist es wesentlich, dass das Polyethylenterephthalat der Kernschicht eine ähnliche Standardviskosität besitzt, wie das Polyethylenterephthalat der Deckschicht(en), die an die Kernschicht angrenzt (angrenzen).

In einer besonderen Ausführungsform können die Deckschichten auch aus einem Polyethylennaphthalat Homopolymeren oder aus Polyethylenterephthalat-Polyethylennaphthalat Copolymeren oder einem Compound bestehen. In dieser Ausführungsform haben die Thermoplaste der Deckschichten ebenfalls ähnliche Standardviskositäten wie das Polyethylenterephthalat der Kernschicht.

In der mehrschichtigen Ausführungsform ist der Flammschutz vorzugsweise in der bzw. den Deckschichten enthalten. Jedoch kann nach Bedarf auch die Kernschicht mit Flammschutzmittel ausgerüstet sein.

Anders als in der einschichtigen Ausführungsform bezieht sich hier die Konzentration des Flammschutzmittels auf das Gewicht der Thermoplasten in der ausgerüsteten Schicht. Ebenso kann der Hydrolysestabilisator in der Deckschicht, bevorzugt in einer Menge von 0,1 bis 1,0 Gew.-% (bezogen auf das Gewicht der jeweiligen Deckschicht) enthalten sein.

Ganz überraschend haben Brandschutzversuche nach DIN 4102 und dem UL-Test gezeigt, dass es im Falle einer dreischichtigen Folie durchaus ausreichend ist, die 0,5 bis 2 µm dicken Deckschichten mit Flammschutzmittel auszurüsten, um eine verbesserte Flammhemmung zu erreichen. Bei Bedarf und bei hohen Brandschutzanforderungen kann auch die Kernschicht mit Flammschutzmittel ausgerüstet sein, d. h. eine sogenannte Grundausrüstung beinhalten.

Dadurch werden die mit der bekannten Koextrusionstechnologie hergestellten schwer entflammbaren, mehrschichtigen Folien im Vergleich zu den komplett in hohen Konzentrationen ausgerüsteten Monofolien wirtschaftlich interessant, da deutlich weniger Flammschutzmittel benötigt wird.

Die Folie kann auch mindestens einseitig mit einer kratzfesten Beschichtung, mit einem Copolyester oder mit einem Haftvermittler versehen sein.

Bei der Herstellung der Folie wurde festgestellt, dass sich mittels Masterbatch-Technologie, einer speziellen Vortrocknung bzw. Vorkristallisation des Masterbatches (s. Verfahrensbeschreibung) und durch Einsatz von geringen Konzentrationen an Hydrolysestabilisator die schwerentflammbare Folie ohne Verklebung im Trockner herstellen läßt. Des Weiteren wurden keine Ausgasungen und Ablagerungen im Produktionsprozess gefunden.

Darüber hinaus ergaben Messungen, dass die erfindungsgemäße Folie bei Temperaturbelastungen von 100 °C über einen längeren Zeitraum nicht versprödet, was mehr als überraschend ist. Dieses Resultat ist wahrscheinlich auf die synergistische Wirkung von geeigneter Vorkristallisation, Vortrocknung, Masterbatch-Technologie und Hydrolysestabilisator zurückzuführen.

Der Oberflächenglanz, gemessen nach DIN 67530 (Messwinkel 20°) ist größer als 100, vorzugsweise größer als 120, die Lichttransmission L, gemessen nach ASTM D 1003, beträgt mehr als 80%, vorzugsweise mehr als 82% und die Trübung der Folie, gemessen nach ASTM D 1003, beträgt weniger als 20% , vorzugsweise weniger als 15%, welches für die erzielte Flammhemmung überraschend gut ist.

Des Weiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder, beim Messebau und für andere Werbeartikel, wo Brandschutz gewünscht wird geeignet.

Überraschenderweise erfüllen schon erfindungsgemäße Folien im Dickenbereich 5 - 300 µm die Baustoffklassen B2 und B1 nach DIN 4102 und dem UL-Test 94.

Die Herstellung der erfindungsgemäßen, transparenten, schwer entflammbaren Folie kann beispielsweise nach dem Extrusionsverfahren in einer Extrusionsstraße erfolgen.

Erfindungsgemäß wird das Flammschutzmittel über die Masterbatch-Technologie zugegeben. Das Flammschutzmittel wird in einem Trägermaterial voll dispergiert. Als Trägermaterial kommen der Thermoplast selbst, wie z. B. das Polyethylenterephthalat oder auch andere Polymere, die mit dem Thermoplasten verträglich sind, in Frage.

Bevorzugt bei der Masterbatch-Technologie ist, dass die Korngröße und das Schüttgewicht des Masterbatches ähnlich der Korngröße und dem Schüttgewicht des Thermoplasten ist, so dass eine homogene Verteilung und damit eine homogene Schwerentflammbarkeit entstehen kann.

Die Polyesterfolien können nach bekannten Verfahren aus einem Polyesterrohstoff mit ggf. weiteren Rohstoffen und dem Flammschutzmittel und/oder weiteren üblichen Additiven in üblicher Menge von 0,1 bis max. 30 Gew.-% sowohl als Monofolie als auch als mehrschichtige, ggf. koextrudierte Folien mit gleichen oder unterschiedlich ausgebildeten Oberflächen hergestellt werden, wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

Erfindungswesentlich ist, dass das Masterbatch, welches das Flammschutzmittel und gegebenenfalls den Hydrolysestabilisator enthält, vorkristallisiert bzw. vorgetrocknet wird. Diese Vortrocknung beinhaltet ein gradielles Erhitzen des Masterbatches unter reduziertem Druck (20 bis 80 mbar, vorzugsweise 30 bis 60 mbar, insbesondere 40 bis 50 mbar ) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160°C, vorzugsweise 20°C bis 150°C, insbesondere 30°C bis 130°C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei 90° bis 180 °C, vorzugsweise 100°C bis 170°C, insbesondere 110°C bis 160°C für 2 bis 8 Stunden, vorzugsweise 3 bis 7 Stunden, insbesondere 4 bis 6 Stunden nachgetrocknet.

Bei dem bevorzugtem Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, in Quer- und nochmals und Längsrichtung und/oder Querrichtung gestreckt. Die Strecktemperaturen liegen im allgemeinen bei $T_G$ + 10 °C bis $T_G$ + 60 °C ($T_G$ = Glastemperatur), das Streckverhältnis der Längsstreckung liegt üblicherweise bei 2 bis 6, insbesondere bei 3 bis 4,5, das der Querstreckung liegt bei 2 bis 5, insbesondere bei 3 bis 4,5 und das der ggf. durchgeführten zweiten Längs- und Querstreckung liegt bei 1,1 bis 5. Die erste Längsstreckung kann ggf. gleichzeitig mit der Querstreckung (Simultanstreckung) durchgeführt werden. Anschließen folgt die Thermofixierung der Folie bei Ofentemperaturen von 180 bis 260 °C, insbesondere bei 220 bis 250 °C. Anschließend wird die Folie abgekühlt und gewickelt.

Daher war es mehr als überraschend, dass mittels Masterbatch-Technologie, einer geeigneten Vortrocknung und/oder Vorkristallisation und gegebenenfalls Einsatz von geringen Mengen eines Hydrolysestabilisators eine schwerentflammbare und thermoformbare Folie mit dem geforderten Eigenschaftsprofil wirtschaftlich und ohne Verklebung im Trockner herstellbar ist und dass die Folie nach Temperaturbelastung nicht versprödet und beim Knicken nicht bricht.

Sehr überraschend war ebenfalls, dass bei diesem hervorragenden Resultat und dem geforderten Flammschutz der Gelbwert der Folie im Vergleich zu einer nicht ausgerüsteten Folie im Rahmen der Meßgenauigkeit nicht negativ beeinflusst ist. Die Gelbzahl der erfindungsgemäßen Polyesterfolie liegt bei < 10.

-    Es wurden keine Ausgasungen, keine Düsenablagerungen, keine Rahmenausdampfungen beobachtet, wodurch die Folie eine exzellente Optik aufweist und ein ausgezeichnetes Profil und eine hervorragende Planlage hat.
-    Die erfindungsgemäße schwerentflammbare Folie zeichnet sich durch eine hervorragende Streckbarkeit aus, so dass sie verfahrenssicher und stabil auf high speed film lines bis zu Geschwindigkeiten von 420 m/min produktionssicher hergestellt werden kann.

Damit ist eine solche Folie auch wirtschaftlich rentabel.

Des Weiteren ist sehr überraschend, dass auch das Regenerat wieder einsetzbar ist, ohne den Gelbwert der Folie negativ zu beeinflussen.

Durch die überraschende Kombination ausgezeichneter Eigenschaften eignet sich die erfindungsgemäße Folie hervorragend für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen.

Die Erfindung wird im folgenden anhand von Ausführungsbeispielen näher erläutert.

Die Messungen der einzelnen Eigenschaften erfolgt dabei gemäß der folgenden Normen bzw. Verfahren:

**Meßmethoden**

**Oberflächenglanz**

Der Oberflächenglanz wir bei einem Messwinkel von 20° nach DIN 67530 gemessen.

**Lichttransmission**

Unter der Lichttransmission ist das Verhältnis des insgesamt durchgelassenen Lichtes zur einfallenden Lichtmenge zu verstehen.

Die Lichttransmission wird mit dem Messgerät "® HAZEGARD plus" nach ASTM D 1003 gemessen.

**Trübung**

Trübung ist der prozentuale Anteil des durchgelassenen Lichtes, der vom eingestrahlten Lichtbündel im Mittel um mehr als 2,5° abweicht. Die Bildschärfe wird unter einem Winkel kleiner 2,5° ermittelt.

Die Trübung wird mit dem Messgerät "HAZEGARD plus" nach ASTM D 1003 gemessen.

**Oberflächendefekte**

Die Oberflächendefekte werden visuell bestimmt.

**Mechanische Eigenschaften**

Der E-Modul und die Reißfestigkeit werden in Längs- und Querrichtung nach ISO 527-1-2 gemessen.

**SV (DCE), IV (DVE)**

Die Standardviskosität SV (DCE) wird angelehnt an DIN 53726 in Dichloressigsäure gemessen.

Die intrinsische Viskosität (IV) berechnet sich wie folgt aus der Standardviskosität

$$IV\ (DCE) = 6{,}67^{\cdot} 10^{-4}\ SV^{\cdot} (DCE) + 0{,}118$$

**Brandverhalten**

Das Brandverhalten wird nach DIN 4102 Teil 2, Baustoffklasse B2 und nach DIN 4102 Teil 1, Baustoffklasse B1 sowie nach dem UL-Test 94 ermittelt.

**Beispiele**

**Beispiel 1**

Es wird eine 50 μm dicke, transparente Folie hergestellt, die als Hauptbestandteil Polyethylenterephthalat, 0,2 Gew.-% Siliciumdioxid (Sylobloc) als Antiblockmittel, 0,2 Gew.-% Hydrolysestabilisator und 4 Gew.-% Flammschutzmittel enthält.

Zwecks homogener Verteilung wird das Sylobloc, das im PET nicht löslich ist, beim Rohstoffhersteller in das Polyethylenterephthalat eingearbeitet.

Das Polyethylenterephthalat, aus dem die transparente Folie hergestellt wird, hat eine Standardviskosität SV (DCE) von 810, was einer intrinsischen Viskosität IV (DCE) von 0,658 dl/g entspricht.

Der Hydrolysestabilisator und das Flammschutzmittel werden in Form eines Masterbatches zudosiert. Das Masterbatch setzt sich aus 20 Gew.-% Flammschutzmittel, 1 Gew.-% Hydrolysestabilisator und 79 Gew.-% Polyethylenterephthalat zusammen.

Bei dem Hydrolysestabilisator handelt es sich um Pentaerythrityl-Tetrakis-3-(3,5-di-Tertiärbutyl-4-Hydroxyphenyl)-Propionat.

Bei dem Flammschutzmittel handelt es sich um die in PET lösliche organische Phosphorverbindung Dimethyl-Methylphosphonat, ® Amgard P 1045 der Fa. Albright & Wilson.

Das Masterbatch hat ein Schüttgewicht von 750 kg/m$^3$ und einen Erweichungspunkt von 69 °C.

50 Gew.-% des Polyethylenterephthalates, 30 Gew.-% Polyethylenterephthalat-Rezyklat und 20 Gew.-% des Masterbatches werden bei Raumtemperatur aus separaten Dosierbehältern in einem Vakuumtrockner gefüllt, der von dem Einfüllzeitpunkt bis zum Ende der Verweilzeit ein Temperaturspektrum von 25 °C bis 130 °C durchläuft. Während der ca. 4-stündigen Verweilzeit wird das Rohstoffgemisch mit 61 Upm gerührt.

Das vorkristallisierte bzw. vorgetrocknete Rohstoffgemisch wird in dem nachgeschalteten, ebenfalls unter Vakuum stehenden Hopper bei 140 °C 4 Stunden nachgetrocknet. Anschließend wird mit dem beschriebenen Extrusionsverfahren die 50 μm Monofolie hergestellt.

Die hergestellte transparente PET-Folie hat folgendes Eigenschaftsprofil:

| | |
|---|---|
| Dicke | 50 μm |
| Oberflächenglanz 1. Seite | 155 |
| (Messwinkel 20 °) 2. Seite | 152 |
| Lichttransmission | 91 % |
| Trübung | 4,0 % |
| Oberflächendefekte pro m$^2$ | keine |
| E-Modul längs | 4100 N/mm$^2$ |
| E-Modul quer | 5400 N/mm$^2$ |
| Reißfestigkeit längs | 170 N/mm$^2$ |
| Reißfestigkeit quer | 260 N/mm$^2$ |
| Gelbzahl (YID) | 3,1 |

Nach 200 Stunden tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 / Teil 1 die Baustoffklassen B2 und B1. Die Folie besteht den UL-Test 94.

**Beispiel 2**

Nach der Koextrusionstechnologie wird eine 17 μm dicke mehrschichtige PET-Folie mit der Schichtreihenfolge A-B-A hergestellt, wobei B die Kernschicht und A die Deckschichten repräsentieren. Die Kernschicht ist 15 μm dick und die beiden Deckschichten, die die Kemschicht überziehen, sind jeweils 1 μm dick.

Das für die Kernschicht B eingesetzte Polyethylenterephthalat ist identisch mit dem aus Beispiel 1, enthält aber kein Siliciumdioxid (Sylobloc). Die Kernschicht enthält 0,2 Gew.-% Hydrolysestabilisator und 5 Gew.-% Flammschutzmittel. Der Hydrolysestabilisator und das Flammschutzmittel werden wie in Beispiel 1 in Form eines Masterbatches zudosiert. Das Masterbatch setzt sich aus 25 Gew.-% Flammschutzmittel, 1 Gew-% Hydrolysestabilisator und 74 Gew.-% Polyethylenterephthalat zusammen. Der Hydrolysestabilisator und das Flammschutzmittel sind identisch mit denen aus Beispiel 1.

Das Polyethylenterephthalat der Deckschicht A ist identisch mit Polyethylenterephthalat aus Beispiel 1, d. h. der Deckschichtrohstoff ist mit 0,3 Gew.-% Sylobloc ausgerüstet. Die Deckschichten enthalten keinen Hydrolysestabilisator und kein Flammschutzmittel.

Für die Kernschicht werden 50 Gew.-% Polyethylenterephthalat, 30 Gew.-% Polyethylenterephthalat-Rezyklat und 20 Gew-% des Masterbatches entsprechend Beispiel 1 vorkristallisiert, vorgetrocknet und nachgetrocknet.

Der Deckschichtrohstoff erfährt keine besondere Trocknung. Mittels Koextrusionstechnologie wird eine 17 μm dicke Folie mit der Schichtreihenfolge A-B-A hergestellt, die folgende Eigenschaften zeigt:

| Schichtaufbau | A-B-A |
|---|---|
| Gesamtdicke | 17 μm |
| Oberflächenglanz 1. Seite | 174 |
| (Messwinkel 20°) 2. Seite | 169 |
| Lichttransmission | 94,2 % |
| Trübung | 2,1 % |
| Oberflächendefekte (Stippen, Orangenhaut, Blasen...) | keine |
| E-Modul längs | 4100 N/mm$^2$ |
| E-Modul quer | 4720 N/mm$^2$ |
| Reißfestigkeit längs | 180 N/mm$^2$ |
| Reißfestigkeit quer | 205 N/mm$^2$ |
| Gelbzahl (YID) | 2,9 |

Nach 200 Stunden Tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 und Teil 1 die Baustoffklasse B2 und B1. Die Folie besteht den UL-Test 94.

**Beispiel 3**

Entsprechend Beispiel 2 wird eine 20 μm A-B-A-Folie hergestellt, wobei die Kernschicht B 16 μm und die Deckschichten A jeweils 2 μm dick sind.

Die Kernschicht B enthält nur 5 Gew.-% des Masterbatches aus Beispiel 2.

Die Deckschichten sind identisch mit denen aus Beispiel 2, enthalten aber 20 Gew.-% des Masterbatches, welches in Beispiel 2 nur für die Kernschicht eingesetzt wurde.

Die Rohstoffe und das Masterbatch für die Kernschicht und die Deckschichten werden entsprechend Beispiel 1 vorkristallisiert, vorgetrocknet und nachgetrocknet.

Die mittels Koextrusionstechnologie hergestellt, mehrschichtige 20 μm Folie hat folgendes Eigenschaftsprofil:

| Schichtaufbau | A-B-A |
|---|---|
| Gesamtdicke | 20 μm |
| Oberflächenglanz 1. Seite | 168 |
| (Messwinkel 20°) 2. Seite | 163 |
| Lichttransmission | 94,0 % |
| Trübung | 2,2 % |
| Oberflächendefekte (Stippen, Orangenhaut, Blasen ...) | keine |
| E-Modul längs | 4000 N/mm$^2$ |
| E-Modul quer | 4700 N/mm$^2$ |
| Reißfestigkeit längs | 180 N/mm$^2$ |
| Reißfestigkeit quer | 205 N/mm$^2$ |
| Gelbzahl (YID) | 2,9 |

Nach 200 Stunden Tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 und Teil 1 die Baustoffklassen B2 und B1. Die Folie besteht den UL-Test 94.

**Vergleichsbeispiel 1**

Beispiel 2 wird wiederholt. Die Folie wird aber nicht mit Masterbatch ausgerüstet, d. h. die Folie enthält keinen Hydrolysestabilisator und kein Flammschutzmittel.

Das Eigenschaftsprofil der unausgerüsteten Folie ist dem der ausgerüsteten Folie aus Beispiel 2 vergleichbar.

Die unausgerüstete Folie erfüllt die Tests nach DIN 4102 Teil 1 und Teil 2 sowie den UL-Test 94 nicht.

**Patentansprüche**

1. Transparente, biaxial verstreckte Polyesterfolie, enthaltend mindestens ein Flammschutzmittel, welches im Polyester löslich ist und über die Masterbatch-Technologie direkt bei der Folienherstellung zudosiert wird und wobei das Masterbatch durch gradielles Erhitzen unter reduziertem Druck und unter Rühren hergestelit wurde.

2. Polyesterfolie nach Anspruch 1, **dadurch gekennzeichnet, dass** sie einen Hydrolysestabilisator enthält.

3. Polyesterfolie nach Anspruch 1 oder 2, **dadurch gekennzeichnet, dass** sich direkt an das gradielle Erhitzen unter reduziertem Druck und unter Rühren ein Nachtrocknen bei konstanter, erhöhter Temperatur ebenfalls unter reduziertem Druck anschließt.

4. Polyesterfolie nach einem der Ansprüche 1 bis 3, **dadurch gekennzeichnet, dass** das Flammschutzmittel ausgewählt wird aus einer oder mehreren organischen Phosphorverbindungen.

5. Polyesterfolie nach einem der Ansprüche 1 bis 4, **dadurch gekennzeichnet, dass** der Hydrolysestabilisator ausgewählt wird aus phenolischen Hydrolysestabilisatoren, Alkali-/Erdalkalistearaten und/oder Alkali-/Erdalkalicarbonaten.

6. Polyesterfolie nach einem der Ansprüche 1 bis 5, **dadurch gekennzeichnet, dass** die Folie 0.5 bis 30.0 Gew.-% Flammschutzmittel enthält.

7. Polyesterfolie nach einem der Ansprüche 1 bis 6, **dadurch gekennzeichnet, dass** die Folie 0.01 bis 1.0 Gew.-% Hydrolysestabilisator enthält.

8. Polyesterfolie nach einem der Ansprüche 1 bis 7, **dadurch gekennzeichnet, dass** die Folie eine Mehrschichtfolie, umfassend eine Basisschicht und mindestens eine Deckschicht, ist.

9. Polyesterfolie nach Anspruch 8, **dadurch gekennzeichnet, dass** das Flammschutzmittel in der Deckschicht enthalten ist.

10. Polyesterfolie nach Anspruch 9, **dadurch gekennzeichnet, dass** das Flammschutzmittel in der Deckschicht in einer Menge von 0,5 bis 30 Gew.-% (bezogen auf das Gewicht der Deckschicht) enthalten ist.

11. Polyesterfolie nach Anspruch 8, 9 oder 10, **dadurch gekennzeichnet, dass** der Hydrolysestabilisator in der Deckschicht enthalten ist.

12. Polyesterfolie nach Anspruch 11, **dadurch gekennzeichnet, dass** der Hydrolasestabilisator in der Deckschicht in einer Menge von 0,1 bis 1,0 Gew.-% (bezogen auf das Gewicht der jeweiligen Deckschicht) enthalten ist.

13. Polyesterfolie nach einem der Ansprüche 1 bis 12, **dadurch gekennzeichnet, dass** sie Rezyklat enthält.

14. Polyesterfolie nach einem der Ansprüche 1 bis 13, **dadurch gekennzeichnet, dass** sie einen Oberflächenglanz, gemessen nach DIN 67530 (Messwinkel 20°), von größer als 100 aufweist.

15. Polyesterfolie nach einem der Ansprüche 1 bis 14, **dadurch gekennzeichnet, dass** sie, eine Lichttransmission L, gemessen nach ASTM D 1003, von mehr als 80 % aufweist.

16. Polyesterfolie nach einem der Ansprüche 1 bis 15, **dadurch gekennzeichnet, dass** sie eine Trübung, gemessen nach ASTM D 1003, von weniger als 20 % aufweist.

17. Polyesterfolie nach einem der Ansprüche 1 bis 16, **dadurch gekennzeichnet, dass** sie eine Gelbzahl von < 10 aufweist.

18. Verfahren zur Herstellung einer Polyesterfolie gemäß Anspruch 1, bei dem eine Polyesterschmelze einer Extrusionsdüse oder zwecks Herstellung einer Mehrschichtfolie Polyesterschmelzen entsprechend den Zusammensetzungen der Deck- und Basisschichten einer Mehrschichtdüse zugeführt werden, aus der Düse auf eine Abkühlwalze extrudiert werden und die so erhaltene Vorfolie anschließend biaxial verstreckt und hitzefixiert wird, wobei der Polyester mindestens ein Flammschutzmittel enthält, welches im Polyester löslich ist und über die Masterbatch-Technologie direkt bei der Folienherstellung zudosiert wird und wobei das Masterbatch durch gradielles Erhitzen unter reduziertem Druck und unter Rühren erhalten wurde.

19. Verwendung einer Folie nach Anspruch 1 als Innenraumverkleidung, als Display, für Schilder, für Schutzverglasungen, im Beleuchtungssektor, im Laden- und Regalbau, als Werbeartikel, Kaschiermedium, für Gewächshäuser, Überdachungen, Außenverkleidungen, Abdeckungen, im Bausektor, als Lichtwerbeprofil, Schattenmatte oder in Elektroanwendungen.

**Claims**

1. A transparent, biaxially oriented polyester film comprising at least one flame retardant which is soluble in the polyester and is fed directly by way of masterbatch technology during film production, where the masterbatch was produced by gradual heating at subatmospheric pressure, with stirring.

2. The polyester film as claimed in claim 1, wherein the film comprises a hydrolysis stabilizer.

3. The polyester film as claimed in claim 1 or 2, wherein the gradual heating at subatmospheric pressure, with stirring, is directly followed by post-drying at constant, elevated temperature, likewise at subatmospheric pressure.

4. The polyester film as claimed in any one of claims 1 to 3, wherein the flame retardant is selected from one or more organic phosphorus compounds.

5. The polyester film as claimed in any one of claims 1 to 4, wherein the hydrolysis stabilizer is selected from the group consisting of phenolic hydrolysis stabilizers, alkali metal/alkaline earth metal stearates and/or alkali metal/alkaline earth metal carbonates.

6. The polyester film as claimed in any one of claims 1 to 5, wherein the film comprises from 0.5 to 30.0% by weight of flame retardant.

7. The polyester film as claimed in any one of claims 1 to 6, wherein the film comprises from 0.01 to 1.0% by weight of hydrolysis stabilizer.

8. The polyester film as claimed in any one of claims 1 to 7, wherein the film has two or more layers and comprises a base layer and at least one outer layer.

9. The polyester film as claimed in claim 8, wherein the flame retardant is present in the outer layer.

10. The polyester film as claimed in claim 9, wherein from 0.5 to 30% by weight (based on the weight of the outer layer) of the flame retardant is present in the outer layer.

11. The polyester film as claimed in claim 8, 9 or 10, wherein the hydrolysis stabilizer is present in the outer layer.

12. The polyester film as claimed in claim 11, wherein from 0.1 to 1.0% by weight (based on the weight of the respective outer layer) of the hydrolysis stabilizer is present in the outer layer.

13. The polyester film as claimed in any one of claims 1 to 12, wherein the film comprises recycled material.

14. The polyester film as claimed in any one of claims 1 to 13, wherein the film has a surface gloss, measured to DIN 67530 (measurement angle 20°), of greater than 100.

15. The polyester film as claimed in any one of claims 1 to 14, wherein the film has a luminous transmittance L, measured to ASTM D 1003, of more than 80%.

16. The polyester film as claimed in any one of claims 1 to 15, wherein the haze of the film, measured to ASTM D 1003, is less than 20%.

**17.** The polyester film as claimed in any one of claims 1 to 16, wherein the film has a Yellowness Index of < 10.

**18.** A process for producing the polyester film as claimed in claim 1, in which a polyester melt is fed to an extrusion die, or to produce a film having two or more layers, polyester melts corresponding to the compositions of the outer and base layers are fed to a coextrusion die, and extruded from the die onto a chill roll, and the resultant prefilm is then biaxially oriented and heat-set, where the polyester comprises at least one flame retardant which is soluble in the polyester and which is fed directly by way of masterbatch technology during film production, and where the masterbatch was obtained by gradual heating at subatmospheric pressure, with stirring.

**19.** The use of the film as claimed in claim 1 as interior decoration, as a display, for placards, for protective glazing, in the lighting sector, in the fitting out of shops or of stores, as a promotional requisite or a laminating medium, for greenhouses, roofing systems, exterior cladding, protective coverings, in the construction sector, as an illuminated advertising profile or a blind, or in electrical applications.

**Revendications**

**1.** Film polyester transparent étiré de manière bi-axiale, contenant au moins un agent retardateur de flamme soluble dans le polyester, lequel est ajouté au moyen de la technologie Masterbatch directement lors de la fabrication du film, le Masterbatch étant préparé par chauffage graduel sous pression réduite et sous agitation.

**2.** Film polyester selon la revendication 1, **caractérisé en ce qu'**il contient un agent de stabilisation à l'hydrolyse.

**3.** Film polyester selon la revendication 1 ou 2, **caractérisé en ce que** s'ensuit directement au chauffage graduel sous pression réduite et sous agitation un séchage subséquent à température élevée constante également sous pression réduite.

**4.** Film polyester selon l'une des revendications 1 à 3, **caractérisé en ce que** l'agent retardateur de flamme est choisi parmi un ou plusieurs composés organiques du phosphore.

**5.** Film polyester selon l'une des revendications 1 à 4, **caractérisé en ce que** l'agent de stabilisation à l'hydrolyse est choisi parmi les agents de stabilisation à l'hydrolyse phénoliques, les stéarates alcalins et alcalins terreux et/ ou les carbonates d'alcalins et/ou alcalins terreux.

**6.** Film polyester selon l'une quelconque des revendications 1 à 5, **caractérisé en ce que** le film contient 0,5 à 30,0 % en poids d'agent retardateur de flamme.

**7.** Film polyester selon l'une quelconque des revendications 1 à 6, **caractérisé en ce que** le film contient 0,01 à 1,0 % en poids d'agent de stabilisation à l'hydrolyse.

**8.** Film polyester selon l'une quelconque des revendications 1 à 7, **caractérisé en ce que** le film est un film multicouche, comprenant une couche de base et au moins une couche de recouvrement.

**9.** Film polyester selon la revendication 8, **caractérisé en ce que** l'agent retardateur de flamme est contenu dans la couche de recouvrement.

**10.** Film polyester selon la revendication 9, **caractérisé en ce que** l'agent retardateur de flamme est compris dans la couche de recouvrement en une quantité de 0,5 à 30 % en poids (par rapport au poids de la couche de recouvrement).

**11.** Film polyester selon la revendication 8, 9 ou 10, **caractérisé en ce que** l'agent de stabilisation à l'hydrolyse est contenu dans la couche de recouvrement.

**12.** Film polyester selon la revendication 11, **caractérisé en ce que** l'agent de stabilisation à l'hydrolyse est contenu dans la couche de recouvrement une quantité de 0,1 à 1,0 % en poids (par rapport au poids de la couche de recouvrement respective).

**13.** Film polyester selon l'une quelconque des revendications 1 à 12, **caractérisé en ce qu'**il contient de la matière recyclée.

**14.** Film polyester selon l'une quelconque des revendications 1 à 13, **caractérisé en ce qu'**il présente une brillance en surface mesurée selon la norme DIN 67530 (Angle de mesure 20°), supérieure à 100.

**15.** Film polyester selon l'une quelconque des revendications 1 à 14, **caractérisé en ce qu'**il présente une transmission lumineuse L, mesurée selon ASTM D 1003, supérieure à 80 %.

**16.** Film polyester selon l'une quelconque des revendications 1 à 15, **caractérisé en ce qu'**il présente une turbidité mesurée selon ASTM D 1003, inférieure à 20 %.

**17.** Film polyester selon l'une quelconque des revendications 1 à 16, **caractérisé en ce qu'**il présente un indice de jaunissement inférieur à 10.

**18.** Procédé de préparation d'un film polyester selon la revendication 1, dans lequel le polyester en fusion est amené vers une buse d'extrusion où pour la préparation d'un film multicouche, les polyesters correspondants aux compositions des couches de base et de recouvrement sont amenés vers une buse multicouche, sont extrudés à travers la buse sur un cylindre de refroidissement et le pré-film ainsi obtenu est ensuite étiré de manière bi-axiale et fixé par chaleur, le polyester contenant au moins un agent retardateur de flamme soluble dans le polyester et ajouté au moyen de la technologie Masterbatch directement lors de la préparation du film et le Masterbatch étant obtenu par chauffage graduel sous pression réduite et sous agitation.

**19.** Utilisation d'un film selon la revendication 1 pour les revêtements d'intérieur, pour des afficheurs, des écriteaux, pour des vitrages de protection dans le secteur de l'éclairage, dans la construction de magasins et de rayons, comme article publicitaire, matériau de doublage, pour des serres, des préaux, des revêtements extérieurs, des protections, dans le secteur du bâtiment, à titre de profilé publicitaire lumineux, comme natte pare-soleil ou dans des applications électriques.